(19)

**Europäisches Patentamt**

**European Patent Office**

**Office européen des brevets**

(11) **EP 4 647 618 A1**

(12) **EUROPEAN PATENT APPLICATION**

(43) Date of publication:
**12.11.2025 Bulletin 2025/46**

(21) Application number: **25171723.7**

(22) Date of filing: **22.04.2025**

(51) International Patent Classification (IPC):
*F16C 1/04* (2006.01)    *F16C 1/26* (2006.01)
*F16C 1/28* (2006.01)    *A61B 1/00* (2006.01)
*B23P 6/00* (2006.01)    *B25B 13/48* (2006.01)
*B25B 23/00* (2006.01)    *B25J 9/06* (2006.01)
*B25J 18/06* (2006.01)    *F01D 5/00* (2006.01)
*F16C 1/08* (2006.01)

(52) Cooperative Patent Classification (CPC):
**F16C 1/04; B23P 6/002; B25B 13/481;
B25B 23/0021; B25J 9/06; B25J 18/06; F16C 1/26;
F16C 1/28;** F01D 5/005; F01D 25/285; F16C 1/08;
F16C 2322/50

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **06.05.2024 US 202463643163 P
06.06.2024 US 202418735776**

(71) Applicants:
• **General Electric Company
Cincinnati, Ohio 45215 (US)**
• **Oliver Crispin Robotics Limited
Altrincham, Cheshire WA14 2DT (GB)**

(72) Inventors:
• **RYALI, Lokaditya
Niskayuna, 12309 (US)**
• **TRIVEDI, Deepak
Niskayuna, 12309 (US)**
• **BENNETT, JR., Grover Andrew
Niskayuna, 12309 (US)**
• **LIU, Chang
Niskayuna, 12309 (US)**
• **GRADY, Wayne Ray
West Chester, 45069 (US)**
• **MONTOYA BLANCO, Raul
Bristol, BS34 7JU (GB)**
• **GRAHAM, Andrew Crispin
Bristol, BS34 7JU (GB)**

(74) Representative: **Openshaw & Co.
8 Castle Street
Farnham, Surrey GU9 7HR (GB)**

(54) **RIGIDIZABLE INSERTION TOOL WITH PNEUMATICALLY DRIVEN END EFFECTOR**

(57) An insertion tool is provided. The tool includes a flexible section (106) a rigidization actuator (120) configured to actuate the flexible section (106) between a rigidized state and a relaxed state, wherein in the rigidized state, a fluid path is formed within the flexible section (106), an end effector (108) coupled to the flexible section (106), and an end effector actuator (604) comprising at least one pneumatic turbine configured to transform fluid force of a fluid from the fluid path into torque to drive a rotation (502) of the end effector (108).

**EP 4 647 618 A1**

FIG. 6

Processed by Luminess, 75001 PARIS (FR)

## Description

The application claims priority to US Provisional Application No.: 63/643,163 filed May 6, 2024, titled: RIGIDIZABLE INSERTION TOOL WITH ROTARY END EFFECTOR, and claims priority to US Application No.: 63/735,776 filed June 6, 2024, titled: RIGIDIZABLE INSERTION TOOL WITH PNEUMATICALLY DRIVEN END EFFECTOR, which are hereby incorporated by reference in their entirety for all purposes.

## FIELD OF THE DISCLOSURE

The present subject matter relates generally to an insertion tool, and more specifically an insertion tool for engine servicing.

## BACKGROUND

Insertion tools have a wide range of applications in various industries. In aviation, insertion tools can be used to inspect, service, and repair assembled engines through annular openings. These tools are designed to provide a cost-effective and time-efficient solution for on-wing repair of aircraft engines, eliminating the need for engine disassembly and reducing downtime. Rigidizable insertion tools are insertion tools with a flexible section that can be selectively rigidized to facilitate inspection, service, or repair operations.

## BRIEF DESCRIPTION OF THE DRAWINGS

A full and enabling disclosure of the present disclosure, including the best mode thereof, directed to one of ordinary skill in the art, is set forth in the specification, which makes reference to the appended figures.

FIG. 1 is a cross-sectional schematic view of a high-bypass turbofan jet engine in accordance with some embodiments of the present disclosure.
FIG. 2A illustrates an insertion tool with a pneumatically driven end effector in an unrigidized state in accordance with some embodiments of the present disclosure.
FIG. 2B illustrates the insertion tool of FIG. 2A in a rigidized state in accordance with some embodiments of the present disclosure.
FIG. 3A is a cross section of two links of an insertion tool of FIG. 2A in an unrigidized state in accordance with some embodiments of the present disclosure.
FIG. 3B is a cross section of the two links of FIG. 3A in a rigidized state in accordance with some embodiments of the present disclosure.
FIG. 4 is a schematic of a pneumatically driven end effector in accordance with some embodiments of the present disclosure.
FIGS. 5A and 5B illustrate another pneumatically driven end effector in accordance with some embodiments of the present disclosure.
FIG. 6 is an insertion tool with a flexible shaft in accordance with some embodiments of the present disclosure.
FIGS. 7A and 7B illustrate tool-less disconnect interfaces that may be used in the insertion tool of FIG. 6 in accordance with some embodiments of the present disclosure.
FIG. 8 is a cross sectional view of a link of the insertion tool of FIG. 6 in accordance with some embodiments of the present disclosure.
FIGS. 9A and 9B illustrate a strand of a flexible shaft in accordance with some embodiments of the present disclosure.
FIG. 10 illustrates dimensions of a coiled wire in accordance with some embodiments of the present disclosure.
FIG. 11 shows a flexible shaft with multiple strands in accordance with some embodiments of the present disclosure.
FIG. 12 includes cross sectional views of several examples of multiple strain shaft constructions in accordance with some embodiments of the present disclosure.
FIG. 13 illustrates an insertion tool with a segmented shaft in accordance with some embodiments of the present disclosure.
FIG. 14 is an end view of a joint of the insertion tool of FIG. 13 in accordance with some embodiments of the present disclosure.
FIG. 15 illustrates an axial cross section view of a link with fluid coupling in accordance with some embodiments of the present disclosure.
FIG. 16 illustrates an insertion tool with a rotary end effector driven by a linear motion shaft in accordance with some embodiments of the present disclosure.

## DETAILED DESCRIPTION

Reference now will be made in detail to embodiments of the present disclosure, one or more examples of which are illustrated in the drawings. Each example is provided by way of explanation of the present disclosure, not limitation of the disclosure. In fact, it will be apparent to those skilled in the art that various modifications and variations can be made in the present disclosure without departing from the scope or spirit of the disclosure. For instance, features illustrated or described as part of one embodiment can be used with another embodiment to yield a still further embodiment. Thus, it is intended that the present disclosure covers such modifications and variations as come within the scope of the appended claims and their equivalents.

As used herein, the terms "first," "second," "third," etc. may be used interchangeably to distinguish one component from another and are not intended to signify location or importance of the individual components.

The terms "coupled," "fixed," "attached to," and the like refer to both direct coupling, fixing, or attaching, as well as indirect coupling, fixing, or attaching through one or more intermediate components or features, unless otherwise specified herein.

The singular forms "a," "an," and "the" include plural referents unless the context clearly dictates otherwise.

Approximating language, as used herein throughout the specification and claims, may be applied to modify any quantitative representation that could permissibly vary without resulting in a change in the basic function to which it is related. Accordingly, a value modified by a term or terms, such as "about," "approximately," "almost," and "substantially" are not to be limited to the precise value specified. In some instances, the approximating language may correspond to the precision of an instrument for measuring the value. For example, the approximating language may refer to being within a 1, 2, 4, 10, 15, or 20 percent margin. These approximating margins may apply to a single value, either or both endpoints defining numerical ranges, and/or the margin for ranges between endpoints. Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

There is an increasing need for efficient on-wing repair of aircraft engines to reduce the time and cost associated with engine disassembly and downtime. However, existing tools have limitations in terms of the path they can take to access the area of interest within the engine. To address this issue, various concepts for a selectively rigidizable tool with a rotary end effector have been developed, which significantly improves the state of confined space repairs. The present disclosure provides various means of transferring motion to a distal rotary end effector while still providing flexible path options for insertion into an engine or engine component. Specifically, utilizing a stronger and more reliable shaft or multiple shafts with shaft couplings allows for more flexibility of the insertion tool while maintaining the necessary rotary power for operation. An insertion tool with improved flexibility The rotating end effector can be mounted on the distal end of a rigidizable guide tube, snake arm robot, or other structures that can be selectively rigidized. These tools are designed to be initially flexible for easy insertion into the engine and then rigidized to stabilize the end effector for repair operations.

Referring now to the drawings wherein identical numerals indicate the same elements throughout the figures.

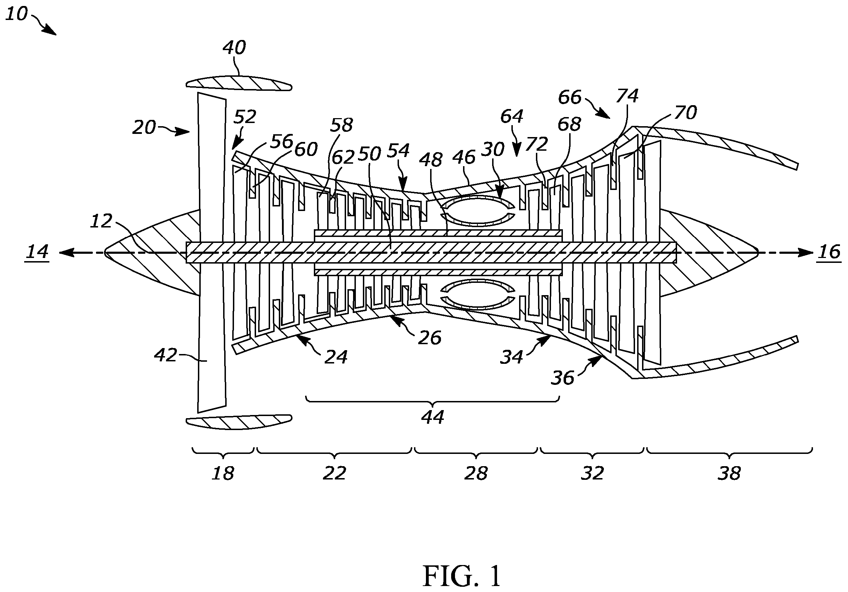

FIG. 1 is a schematic cross-sectional diagram of a conventional gas turbine engine 10 for an aircraft in which a servicing, repair, and/or inspection system described herein can operate. The engine 10 has a generally longitudinally extending axis or centerline 12 extending forward 14 to aft 16. The engine 10 includes, in downstream serial flow relationship, a fan section 18 including a fan 20, a compressor section 22 including a booster or low pressure (LP) compressor 24 and a high pressure (HP) compressor 26, a combustion section 28 including a combustor 30, a turbine section 32 including a HP turbine 34 and a LP turbine 36, and an exhaust section 38.

The fan section 18 includes a fan casing 40 surrounding the fan 20. The fan 20 includes a plurality of fan blades 42 disposed radially about the centerline 12.

The HP compressor 26, the combustor 30, and the HP turbine 34 form a core 44 of the engine 10 which generates combustion gases. The core 44 is surrounded by a core casing 46 which can be coupled with the fan casing 40. The casing 46 also surrounds LP c compressor 24 and HP compressor 26.

An HP shaft or spool 48 disposed coaxially about the centerline 12 of the engine 10 drivingly connects the HP turbine 34 to the HP compressor 26. A LP shaft or spool 50, which is disposed coaxially about the centerline 12 of the engine 10 within the larger diameter annular HP spool 48, drivingly connects the LP turbine 36 to the LP compressor 24 and fan 20.

The LP compressor 24 and the HP compressor 26 respectively include a plurality of compressor stages 52, 54, in which a set of compressor blades 56, 58 rotate relative to a corresponding set of static compressor vanes 60, 62 (also called a nozzle) to compress or pressurize the stream of fluid passing through the stage. In a single compressor stage 52, 54, multiple compressor blades 56, 58 can be provided in a ring and extend radially outwardly relative to the centerline 12, from a blade platform to a blade tip, while the corresponding static compressor vanes 60, 62 are positioned downstream of and adjacent to the rotating blades 56, 58. It is noted that the number of blades, vanes, and compressor stages shown in FIG. 1 were selected for illustrative purposes only, and that other numbers are possible.

The HP turbine 34 and the LP turbine 36 respectively include a plurality of turbine stages 64, 66, in which a set of turbine blades 68, 70 are rotated relative to a corresponding set of static turbine vanes 72, 74 (also called a nozzle) to extract energy from the stream of fluid passing through the stage. In a single turbine stage 64, 66, multiple turbine blades 68, 70 can be provided in a ring and extend radially outwardly relative to the centerline 12, from a blade platform to a blade tip, while the corresponding static turbine vanes 72, 74 are positioned upstream of and adjacent to the rotating blades 68, 70. It is noted that the number of blades, vanes, and turbine stages shown in FIG. 1 were selected for illustrative purposes only, and that other numbers are possible.

In operation, the rotating fan 20 supplies ambient air to the LP compressor 24, which then supplies pressurized ambient air to the HP compressor 26, which further pressurizes the ambient air. The pressurized air from the HP compressor 26 is mixed with fuel in the combustor 30 and ignited, thereby generating combustion gases. Some work is extracted from these gases by the HP turbine 34, which drives the HP compressor 26. The combustion gases are discharged into the LP turbine 36, which extracts additional work to drive the LP compressor 24, and the exhaust gas is ultimately discharged from the engine 10 via the exhaust section 38. The driving of the LP turbine 36 drives the LP spool 50 to rotate the fan 20 and the LP compressor 24.

It will be appreciated that the engine 10 may further define a plurality of openings allowing for inspection, servicing, and/or repair of various components within the engine 10 without disassembling or only partially disassembling the engine 10. For example, the engine 10 may define a plurality of insertion tool openings at various axial positions within the compressor section, combustion section 28, and turbine section 32. Additionally, the engine 10 may include one or more igniter ports within, e.g., the combustion section 28 of the engine 10, that may allow for inspection, servicing, and/or repair of the combustion section 28.

It should further be appreciated that the exemplary engine 10 depicted in FIG. 1 is by way of example only, and that in other exemplary embodiments, the engine 10 may have any other suitable configuration, including, for example, any other suitable number of shafts or spools, turbines, compressors, etc. Additionally, or alternatively, in other exemplary embodiments, any other suitable turbine engine may be serviced, repaired, and/or inspected with the systems and methods described herein. For example, in other exemplary embodiments, the engine 10 may not be a turbofan engine, and instead may be configured as a turboshaft engine, a turboprop engine, turbojet engine, etc., or may be an industrial gas turbine engine for electricity generation, fluid pumping, etc. In some embodiments, the systems and methods described herein may be used for the servicing, repair, or inspection of other aircraft or vehicle components. In some embodiments, the systems and methods described herein may be used in the servicing and/or inspection of any type of devices susceptible to internal surface damages such as cracks, dents, scratches, corrosions, abrasions, oxidations, etc., that requires servicing and repairs.

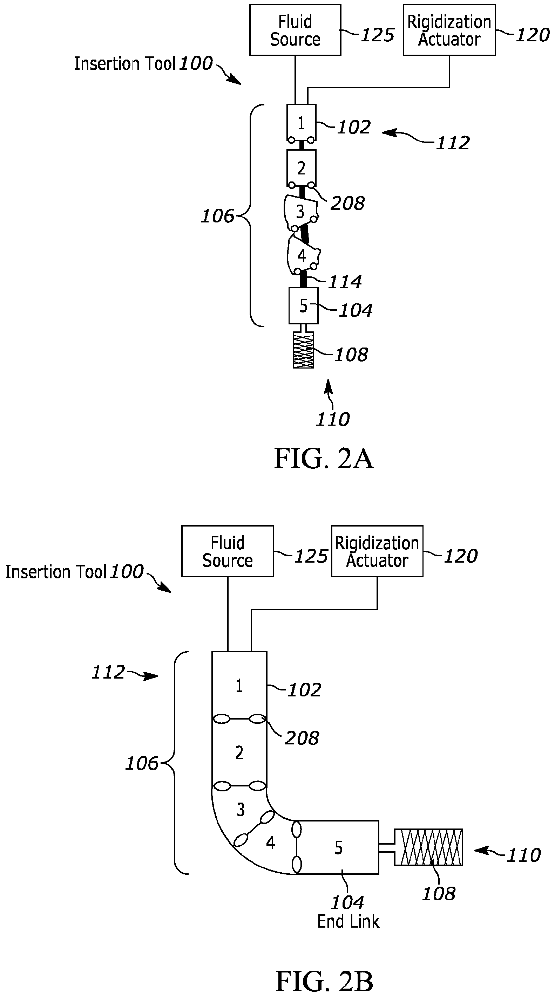

In FIGS. 2A-5, embodiments of an insertion tool 100 with a pneumatically driven end effector are shown. FIG. 2A illustrates an insertion tool 100 in an unrigidized state in accordance with some embodiments. The insertion tool 100 includes a flexible section 106 and an end effector 108. The insertion tool 100 may comprise an inspection, servicing, and/or repair tool configured to be inserted into a confined cavity to inspect, service, or repair a surface or component within the cavity. In some embodiments, the insertion tool 100 may be an engine inspection, servicing, and/or repair tool sized and shaped to be inserted into an engine, such as the engine 10 of FIG. 1, through a port (e.g., an opening in the casing 46) and secured to the exterior of the engine 10 to perform operations. Inspection or repair operations may include blending, grinding, drilling, milling, polishing, etc., of a surface, device, or component within an engine, such as the engine 10, that is susceptible to internal damage. As used herein, the end of the insertion tool 100 that couples to the end effector 108 is referred to as the distal end 110, and the opposite end is referred to as the proximal end 112. Generally, the insertion tool 100 is inserted with the distal end 110 first, while at least a portion of the proximal end 112 may remain outside of the confined space during operations of the insertion tool 100 on a workpiece.

The flexible section 106 includes a plurality of rigidizable links 102 (one of which is referenced in FIGS. 2A and 2B), including an end link 104 coupled to the end effector 108. In the illustrated example, the flexible section 106 is depicted as having five links 102, but can include any number of links (e.g., two, three, four, six, seven, etc.). The rigidizable links 102 may include links of a rigidizable guide tube, a snake arm robot, or other similar devices. In some embodiments, in the unrigidized state, the links 102 may be connected with a connector such as springs, hinges, one or more flexible spines, or a shaft that drives the end effector 108. In some embodiments, shaft couplers 114 described herein may also function as a connector between the links when the links are rigidized and unrigidized. The rigidizable links 102 may include end features that engage with adjacent links to rigidize the flexible section 106 into a predefined shape when force is applied via a rigidization actuator 120. FIG. 2A illustrates the insertion tool 100 in a non-rigidized relaxed state in which the rigidizable links 102 are not engaged (e.g., spaced apart, touching, or touching but not tensioned). In this state, the links are capable of movement in some (one, two, or three) degrees of freedom relative to each other allowing the flexible section 106 to bend during the insertion of the insertion tool 100. Once the tool 100 is inserted into position, the insertion tool 100 may be rigidized, from the unrigidized state shown in FIG. 2A to the rigidized state shown in FIG. 2B, to position the end effector 108 at a desired location and orientation to allow for inspection, servicing and/or repair of a part such as an engine component.

The flexible section 106 is rigidizable from a relaxed or unrigidized state, as seen illustrated in FIG. 2A, to a tensioned or rigidized state, as seen illustrated in FIG. 2B, by a rigidization actuator 120. In some embodiments, the rigidization actuator 120 may include a tension rope assembly inserted through the plurality of rigidizable links 102 and coupled to the end link 104 to cause tensioning of the links 102 with the pulling of the rope assembly. In some embodiments, the rigidization actuator 120 may cause rigidization of the flexible section 106 via a layer jamming mechanism, electromagnetic stiffness tuning of magnetorheological materials, electromagnetic stiffness tuning of electro-rheological fluids, stiffness modulation with phase change, stiffness modulation with pressurization, or other rigidization means. When rigidized, the rigidizable links 102 may define a complex geometry extending through a three-dimensional cartesian coordinate system. That is, the insertion tool 100 may simultaneously extend in the X-, Y-, and Z-axis along its length from the proximal end 112 to the distal end 110. The particular shape of the tool 100 can be configured based on the shape of the environment within which the tool 100 is to be used. In some embodiments, the flexible section 106 includes one or more links as described in U.S. Patent Application Publication US2022/0221706A1, titled "Insertion Tool," the entirety of which is incorporated herein by reference. In some instances, the particular shape of the tool 100 may be configured to be a unique, pre-defined shape when the tool is rigidized.

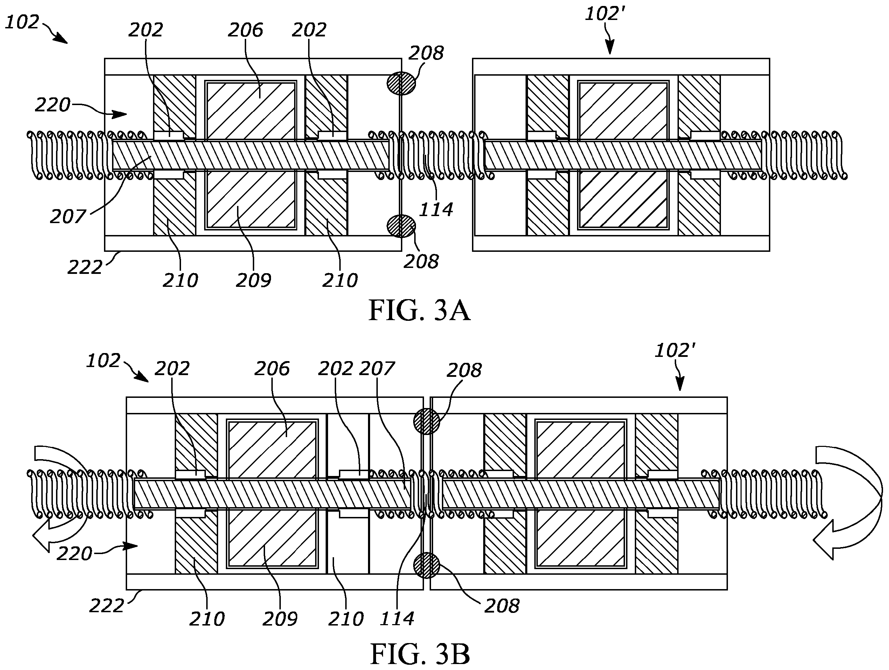

The plurality of links 102 may each include a central cavity 220 (FIGS. 3A and 3B), such as a channel or passageway, that are aligned when the links 102 are rigidized. For the insertion tools 100 that are pneumatically driven, sealing elements 208 may be positioned around at least one end of the central cavity 220 and provide a fluid seal when the links are rigidized such that a fluid path forms to deliver fluid from a fluid source 125 to one or more of the links 102.

The insertion tool 100 further includes an end effector actuator providing power/torque to end effector 108. For pneumatically driven end effectors, the end effector actuator may comprise a fluid source 125. The end effector 108 may be rotatably coupled to the end link 104. In some embodiments, the end effector 108 includes at least one of a blending tool, a grinding tool, a drilling tool, a milling tool, a honing tool, a cleaning tool, a polishing tool, or other applicable tools. In some embodiments, the insertion tool 100 may comprise a turbo machinery servicing tool.

FIGS. 3A and 3B illustrate cross-section views of two adjacent links 102 and 102' of an insertion tool 100, such as the insertion tool 100 shown in FIGS. 2A and FIG. 2B according to some embodiments. In FIG. 3A, the links 102, 102' are not tensioned and may be links of an unrigidized tool being inserted into an engine part or component. In FIG. 3B, the links 102, 102' are tensioned to provide torque to the end effector 108 (FIGS. 2A, 2B). Each link 102, 102' includes sealing elements 208 (only shown in connection with link 102) providing a seal to a central cavity 220 that houses a pneumatic turbine 206 supported by stationary guide vanes 210. Each pneumatic turbine 206 includes a shaft 207 and a plurality of blades 209 that are configured to rotate the shaft 207 with fluid flow through the central cavity 220. The stationary guide vanes 210 are coupled to a housing 222 of the link and act as a mount to a pneumatic turbine 206 via bearings 202 around the shaft 207 of the turbine 206. A shaft coupler 114 is coupled between the shafts 207 of pneumatic turbines 206 in adjacent links 102 and 102'. The shaft coupler 114 generally couples the two or more pneumatic turbines 206 to transfer torque when the plurality of rigidizable links are rigidized, but allow for relative movement of the two or more pneumatic turbines 206 when the plurality of rigidizable links are in the unrigidized state. The shaft couplers 114 as shown include compressible springs (e.g., coil springs) that are compressed when the links 102 are tensioned as shown in FIG. 3B. In the rigidized state, the spring transmits torque from the shaft 207 of an upstream turbine 206 to a downstream turbine 206. The spring may coil in the same direction as the rotation of the turbine such that the spring tightens with turbine rotation. In some embodiments, the shaft coupler 114 may instead be a flexible cable, universal coupling, cardan coupling, bevel gears, magnetic coupling, fluid coupling, friction plates, flexible spline shaft, or elastic shaft.

The sealing elements 208 are provided between rigidizable links 102 to form a fluid path along the central cavity 220 of a plurality of links. In some embodiments, the fluid path is a pneumatically sealed fluid path between a fluid source 125 (FIGS. 2A and 2B) at a proximal end of the insertion tool 100 and the turbines 206 closest to the end effector 108. The sealing elements 208 may include one or more of a bellow, a gasket, a spline seal, or an O-ring disposed between adjacent rigidizable links 102. In some embodiments, the fluid path may terminate before reaching the end link 104 (e.g., 2, 3, or 4 links upstream) and a flexible shaft or other types of couplings may transmit torque from the turbine embedded in a link 102 to the end link 104. The fluid may exit at the distal end, return and exit at the proximal end, or circulate in a closed fluid circuit formed in the links 102.

The pneumatic turbines 206 are generally configured to transform fluid force of a fluid from the fluid path into torque to drive a rotation of the end effector 108. In some embodiments, the fluid force may comprise pressurized air or fluid (e.g., compressed shop air), and may drive the two or more pneumatic turbines 206 via fluid pressure, fluid velocity, or fluid velocity-pressure compounded. In FIGS. 3A and 3B, pneumatic turbines 206 are each housed within different rigidizable links 102 and form a serial flow circuit along the fluid path within the flexible section 106. In some embodiments, the pneumatic turbines 206 may include an upstream turbine and a downstream turbine, the downstream turbine having a greater diameter compared to the upstream turbine, or a different diameter, a different number of blades, or a different blade pitch, or any combination of the foregoing, and may be axially aligned with and/or centrifugal to each other.

While, in FIGS. 3A and 3B, pneumatic turbines 206 are shown in adjacent links 102 and 102', the insertion tool 100 may include one or more pneumatic turbines 206 variously arranged along the flexible section 106. For example, the first to fourth link may be hollow while the fifth and sixth link each house a turbine. In other words, one or more of the links may by hollow and not contain a turbine, while other ones of the links may contain a turbine. In other embodiments, the rigidizable links 102 may form two or more fluid paths when rigidized, with the two or more pneumatic turbines 206 forming a parallel flow circuit, each being driven by fluid from a different fluid path. In some embodiments, a first fluid path may flow from the proximal end 112 towards the distal end 110 of the tool 100 (i.e., source flow), while a second fluid path may flow from at or near the distal end 110 of the tool 100 towards the proximal end 112 of the tool 100 (i.e., return flow), the two fluid paths being connected at or near the distal end of the tool, so that no fluid is required to be discharged from the tool 100 except at the proximal end 112. In another embodiment, a closed fluid circuit may be formed of two or more such fluid paths, the paths containing both a compressor or pump near the proximal end 112 of the tool, and a turbine at the distal end of the tool or distributed along the length of the tool as previously described. In yet another embodiment, the turbines 206 may form an Archimedean screw turbine or a conical screw turbine. In some embodiments, the turbine 206 positioned closest to the end effector 108 may be coupled to the end effector 108 via a rigid or flexible shaft to cause the rotation of the end effector 108 with the rotation of the turbine 206. In some embodiments, a pneumatic turbine 206 may be housed in the end link 104 and be directly coupled to a shaft of the end effector 108 (FIG. 2A). With one or more pneumatic turbines 206 housed within the plurality of rigidizable links 102 and end link 104 shown in FIGS. 2A and 2B, the end effector 108 may be driven by the pneumatic power supplied by the fluid source 125. In embodiments where serial pneumatic turbines are housed within a plurality of links 102, having multiple stages allows for better load distribution and reduced stress on individual components, leading to longer operational life and reduced vibration in the insertion tool 100.

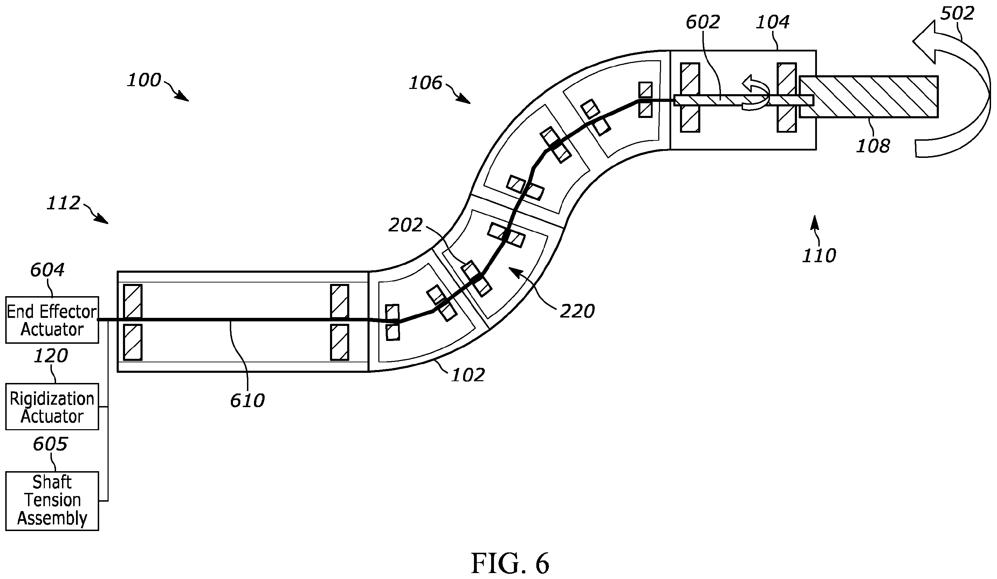

Utilizing a multistage turbine approach may help to run the insertion tool 100 at a lower speed with higher torque without the need for a gearbox which improves the efficiency of the insertion tool 100. The embodiment described with reference to FIGS. 3A and 3B additionally does not require lubrication, which may increase the life of the shaft couplings 114. Implementing a modular design may save time and cost, as in the event of a failed connection of the shafts 207 and the shaft couplings 114, the entire insertion tool 100 need not be replaced, only the failed connections. Additionally, the constant flow of air passing through the bearings 202 and over the end effector 108 regulates the temperature of the insertion tool 100 and its components thereof. Utilizing the shafts 207 and the shaft couplers 114 may allow for the insertion tool 100 to be longer than it is in embodiments with a single connector connecting the plurality of rigidizable links 102, such as the flexible shaft 610 described in FIG. 6, which may be useful when inspecting, servicing, or repairing a part, such as an engine component, that requires a longer insertion tool. Further, if the pneumatic turbines 206 are only in the straight section of the insertion tool 100, there is no limitation due to the life of the shaft couplings 114.

In some embodiments, the end effector 108 of an insertion tool 100 may be pneumatically driven via an actuator integrated with the end effector 108 and/or embedded in the end link 104. The central cavities 220 of the plurality of rigidizable links 102, when rigidized, form a fluid path that directs fluid from a fluid source 125 to the integral actuator of the end effector 108. Examples of integral actuators include pneumatic pistons, hollow rotary end effectors, and dental air turbines.

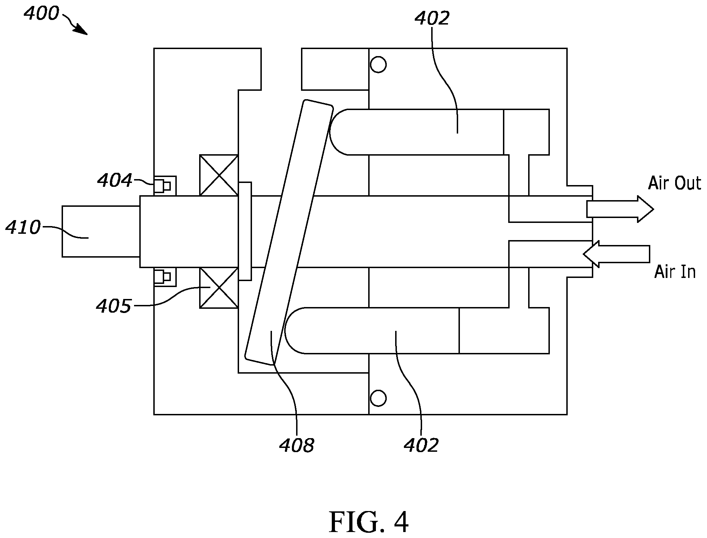

FIG. 4 is an illustration of an axial piston motor 400 configured to convert pneumatic power to torque. In some embodiments, the axial piston motor 400 may be coupled to the end effector 108 as shown in FIGS. 2A and 2B at a central shaft 410 such that the pneumatic power supplied from the fluid path formed by the plurality of rigidizable links 102 drives the motion of the end effector 108 via the axial piston motor 400. The axial piston motor 400 includes two or more pistons 402, a swash plate 408, bearings 405, and sealing elements 404. The pistons 402 are arranged axially around the central shaft 410 and the swash plate 408 is mounted at an angle to the central shaft 410. When compressed air enters the motor and pushes on the pistons 402, the pistons 402 alternatingly extends and retracts to rotate the swash plate 408, thereby converting pneumatic pressure into rotation motion of the swash plate 408 that is transferred to the central shaft 410 to drive an end effector 108.

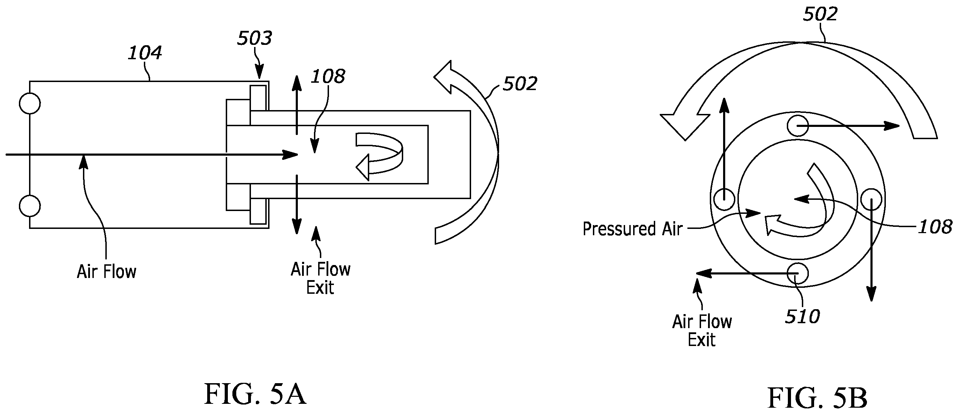

FIGS. 5A and 5B are illustrations of a pneumatically driven end effector 108 that may be coupled to an insertion tool 100 according to some embodiments. FIG. 5A is a side view of the pneumatically driven end effector 108, while FIG. 5B is a top view of the pneumatically driven end effector 108. Pressurized air is supplied from a flow path to a hollow interior of end effector 108 and released through multiple fluid exits 510 of the end effector 108 at an angle so that the released air causes the rotation 502 of the end effector 108. While four fluid exits 510 are shown in FIG. 5B, there may be any number of fluid exits 510 to cause the rotation 502 of the end effector 108. The end effector 108 may also include bearings 503 where the end effector 108 connects to the end link 104, which enables the end effector 108 to rotate smoothly relative to the end link 104. In some embodiments, the end effector 108 may be driven by fluid flow supplied via the fluid path formed by a plurality of rigidized links 102 as described with reference to FIGS. 2A-3B herein.

FIGS. 6-12 show embodiments of an insertion tool 100 with a flexible shaft 610 for driving the rotation of an end effector 108. The insertion tool 100 shown in FIG. 6 includes a flexible section 106 formed by a plurality of rigidizable links 102 (one of which is referenced in FIG. 6) and an end effector 108 coupled to the distal end 110 of the flexible section 106. In some embodiments, the flexible section 106 and the end effector 108 may be the same or similar to the flexible section 106 and the end effector 108 described with reference to FIGS. 3A and 3B. The flexible section 106 may include a plurality of rigidizable links 102 each having a central cavity 220 forming a shaft guide. In the embodiment shown in FIG. 6, a flexible shaft 610 is shown inserted through the shaft guide formed by the plurality of rigidizable links 102 of the flexible section 106. Torque is transferred from the end effector actuator 604 at the proximal end 112 to the distal end 110 via the flexible shaft 610. The flexible shaft 610 is coupled to a shaft of the end effector 108 within the end link 104 to cause the rotation 502 of the end effector 108. The flexible shaft 610 also functions as an effector connector that connects the plurality of rigidizable links 102 in the unrigidized state.

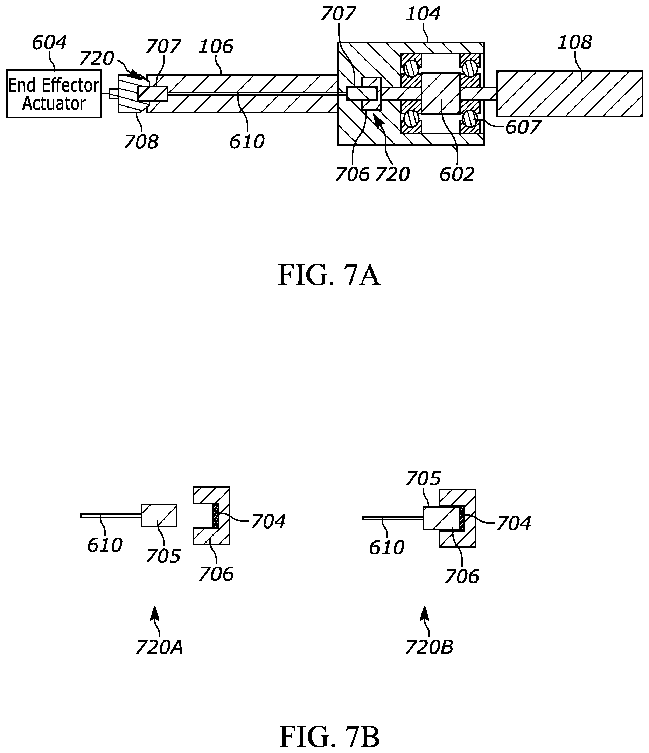

In some embodiments, the insertion tool 100 includes a tool-less disconnect interface 720 (FIGS. 7A, 7B) between the end effector 108 and the flexible shaft 610 and/or between the end effector actuator 604 and the flexible shaft 610. In some embodiments, the insertion tool 100 includes one or more shaft bearings 202 positioned within the central cavity 220, the links 102 of the flexible section 106, and around the flexible shaft 610. In some embodiments, the insertion tool 100 may further comprise a shaft tension assembly 605 configured to maintain a tension of the flexible shaft 610 between 1-10% of a tensile strength of the flexible shaft 610, between 1-50% of a tensile strength of the flexible shaft 610, or between 0.1-5% of a tensile strength of the flexible shaft 610. In some embodiments, the shaft tension assembly 605 may comprise a compression spring coupled to the proximal end 112 of the flexible shaft 610. In some embodiments, the shaft tension assembly 605 may comprise active controls that adjust shaft tension based on sensor measurements. In some embodiments, a rigidization actuator 120 is configured to actuate the plurality of rigidizable links 102 in the flexible section 106 from a unrigidized state to a rigidized state having a predefined shape. In some embodiments, the rigidization actuator 120 may perform the same or similar function as the rigidization actuator 120 described with reference to FIGS. 3A and 3B above.

The end effector actuator 604 may comprise a motor (e.g., an electric motor, a pneumatic-driven motor) for providing torque to the end effector 108 via the flexible shaft 610. In some embodiments, the end effector actuator 604 may be a rotary motor or a linear motor with a rotary motion conversion mechanism.

FIG. 7A is an illustration of the insertion tool 100 with a tool-less disconnect interface 720. A tool-less disconnect interface 720 generally refers to an interface that may be disconnected manually, without the use of a tool. The tool-less disconnect interface 720 may comprise male and female features that may be connected and disconnected without tools. Since the flexible shaft 610 has a generally short lifespan compared to other components of the insertion tool 100, the inclusion of the tool-less disconnect interface 720 allows for efficient disconnect and connect of the flexible shaft 610 during replacement. Connection and disconnection being possible by hand is time efficient during replacement when compared to a disconnect interface that requires tools. In FIG. 7A, the tool-less disconnect interface 720 couples the flexible shaft 610 with end effector 108 via a shaft 602 of the end effector 108 which is supported within the end link 104 via bearings 607. In some embodiments, a second tool-less disconnect interface 720 couples the multiple fluid exits 510 (FIG. 5B) with an end effector actuator 604. The flexible section 106, through which the flexible shaft 610 is inserted, is simplified in FIG. 7A for clarity, and may be the same or similar to the flexible section 106 described with reference to FIG. 6.

In FIG. 7A, the flexible shaft 610 has male features that couple with female features on the end effector actuator 604 and the end effector 108. In the embodiment described in FIG. 7A, a spline 707 may be the female adaptor, while an adaptor 706 or a micro chuck 708 may be the male adaptor. However, the male-female interface may be reversed. In some embodiments, the tool-less disconnect interface 720 includes a swaged spline or threaded fitting. For example, the tool-less disconnect interface 720 may comprise the spline 707 and the micro chuck 708. In FIG. 7A, the flexible shaft 610 includes the spline 707 on both ends, and is coupled between the micro chuck 708 at the proximal end 112 and an adaptor 706 at the distal end 110. The micro chuck 708 is further coupled to the end effector actuator 604, and the adaptor 706 is further coupled to the shaft 602 of the end effector 108. When directly clamped to the flexible shaft 610, the micro chuck 708 may have a low slip torque and may slip when operational torque is reached. When clamped to the spline 707, particularly the swaged spline described above, the micro chuck 708 is able to overcome the aforementioned low slip torque limitation. In some embodiments, the tool-less disconnect interface 720 may include a square spline, a hexspline, or a polygonal spline on the flexible shaft 610. In some embodiments, the tool-less disconnect interface 720 may alternately comprise a threaded fitting wherein a thread direction of the threaded fitting is such that the threaded fitting tightens in the direction of rotation of the flexible shaft 610.

FIG. 7B illustrates another embodiment of a tool-less disconnect interface with a magnetic connection in connected (720A) and disconnected (720B) states. In FIG. 7B, the male feature comprises a ferromagnetic spline fitting 705 on the flexible shaft 610, and the female feature comprises the adaptor 706 with a magnet 704. In other embodiments of a magnetic tool-less disconnect interface 720, both sides of the interface may be similar and may comprise a series of two or more magnets with their pole orientations alternating between alternate magnets. In some embodiments, the flexible shaft 610 may instead include one or more female features. In some embodiments, a torque limiting feature such as a friction clutch or a magnetic clutch may also be included in the drive train, at some position along the length of the flexible shaft 610 or in line with the tool-less disconnect interface 720. A person skilled in the art will appreciate that the functions of the tool-less disconnect interface 720 and the torque limiting feature may be provided by a single device such as a spline fitting and/or a magnetic fitting previously described.

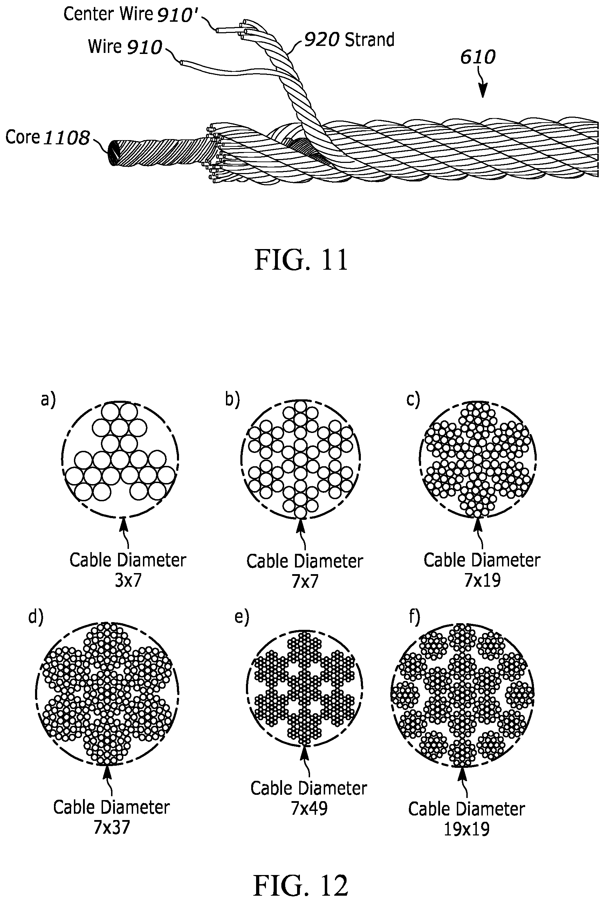

In some embodiments, a tool-less disconnect interface 720 shown in FIGS. 7A and 7B may connect the flexible shaft 610 with the end effector actuator 604 and/or end effector 108 as shown in FIG. 6. With the flexible shaft 610 being a component of the insertion tool 100 that is susceptible to wear and breakage, tool-less disconnect interfaces 720 allow the flexible shaft 610 to be easily removed for inspection, repair, and/or replacement. In some embodiments, such as the embodiment described in FIG. 11, the flexible shaft 610 may be formed by one or more of strands formed of multiple coiled wires. In some embodiments, the flexible shaft 610 may include a strand built into to the shaft and constructed of a material which is less susceptible to bending stresses than the majority of the wires of the shaft. When one or more wires break, the broken flexible shaft 610, including broken wire segments, may easily be retrieved from the tool via the unbroken strand to enable replacement. Shaft breakage may be detected by a sensor, for example, a torque sensor to measure a reduction in operating torque of the tool, a frangible fiber optic element in the shaft which causes an open optical circuit when broken, an electrical conductor in the shaft which loses continuity in the event of a broken shaft, or any other means of measuring or inferring that the flexible shaft is broken.

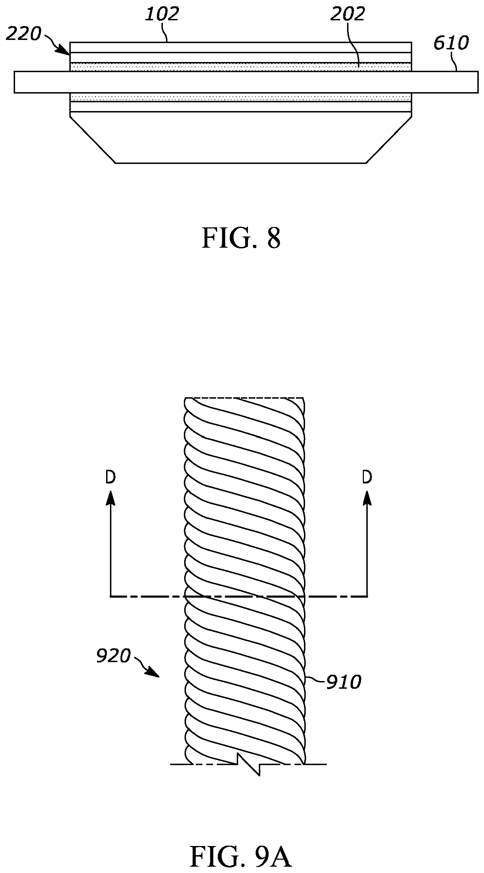

FIG. 8 is an axial cross-sectional view of a link 102 with a bearing 202 extending the length of the link 102. In some embodiments, the flexible section 106 in FIG. 6 may be formed of a plurality of links 102 shown in FIG. 8. The link 102 has a central cavity 220 through which the flexible shaft 610 is inserted. The bearing 202 is positioned between the link 102 and flexible shaft 610 within the central cavity 220 to improve the life of the flexible shaft 610 by limiting whipping of the flexible shaft 610 during operation. In some embodiments, the bearings 202 includes an extension spring coiled around the flexible shaft 610. In some embodiments, the ratio of the inner diameter of the extension spring to an outer diameter of the flexible shaft 610 is between 1.2 to 3.0. In some embodiments, the flexible shaft 610 comprises a plurality of layers of wires surrounding a center wire. Wear on the flexible shaft 610 can further be minimized when the coil direction of the extension spring is matched with the coil direction of the outermost layer of the flexible shaft 610. In some embodiments, for a coiled flexible shaft 610, the coil direction of the spring has the same coil direction as an outmost layer of the flexible shaft 610. In some embodiments, the shaft bearing 202 comprises a flexible hollow polytetrafluoroethylene tube or a braided cable sleeve. In some embodiments, at least one inner surface of the shaft bearing 202 or an outer surface of the flexible shaft 610 is coated with one or more of a wire rope lubrication, molybdenum disulfide coating, graphite coating, fluoropolymer, polytetrafluoroethylene coating, or other friction-reducing coatings. Generally, an insertion tool 100 with moderate tension in flexible shaft 610, a close gap clearance between the tool 100 and flexible shaft 610, and with lubrication between the rotating shaft and any stationary interfaces, lends to a higher operational level and shaft life in the tool 100.

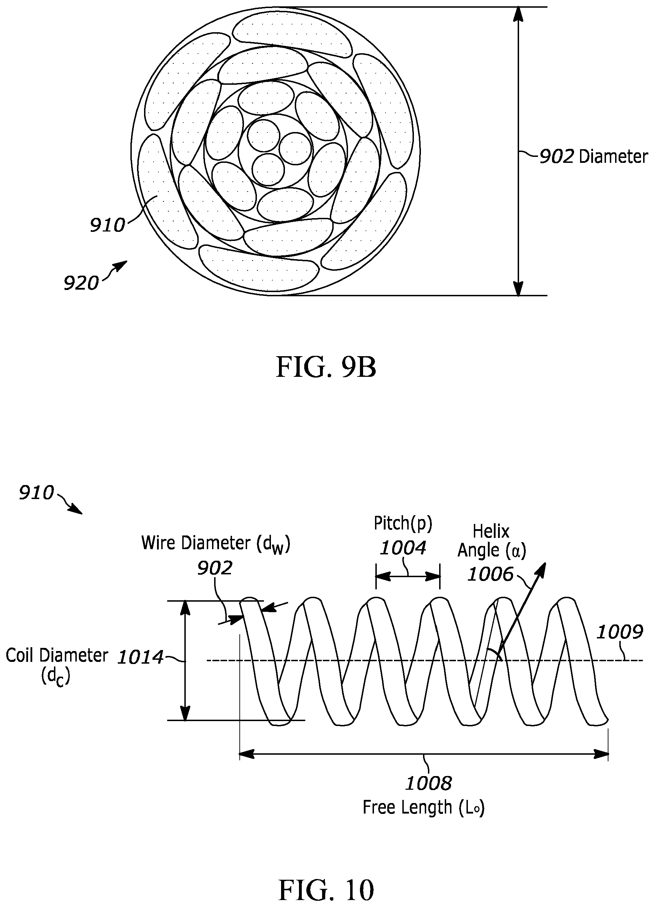

FIG. 9A is an illustration of a strand 920 of coiled wires 910 in accordance with some embodiments. In some embodiments, the flexible shaft 610 (FIG. 6) may be formed by one or more strands 920 of coiled wires 910. FIG. 9B is a cross-sectional view of the strand 920 taken along the line D-D, showing a plurality of layers of coiled wires 910 within the strand 920 having a diameter 902. In FIG. 9B, the strand 920 includes four layers, with three, six, six, and six wires in the inner most to the outermost layer. FIG. 9B is shown as an example only, and a strand 920 may be formed of any number of wires in any number of layers. In some embodiments, the strand 920 may have a hollow core with coiled wires around the core. For example, the three wires in the innermost layer shown in FIG. 9B may be removed to form a hollow core. In some embodiments, a strand with a hollow core has a core diameter that is at least as wide as the diameter of the smallest wires in the stand. In some embodiments, the strand 920 may include one or more straight (i.e., 0 coil angle) wires at the core, radially inwards of the first coiled layer. In some embodiments, the strand 920 may have a core formed by other materials such as a fiber, a polymer, and/or a metal. In some embodiments, the stand diameter may be between 0.01 to 0.1 inches. In some embodiments, the wires 910 may be monofilament wires made of one or more of stainless steel, high-performance alloy, nitinol, superelastic material, tungsten, and/or titanium. In some embodiments, wires 910 may be interlaced with steel and self-lubricating plastic wires, forming a self-lubrication shaft with reduced interwire friction. In some embodiments, the wires 910 may be made of fiber or superelastic materials which may have improved fatigue life, flexibility, torsional capacity, and damping in the cable. In some embodiments, the flexible shaft may comprise material formed by 80-90% cold work.

FIG. 10 is an illustration of dimensions of a coiled wire 910 that can be coiled together with other wires to form a strand 920 shown in FIG. 9A. A coiled wire 910 has a wire diameter (d) 902, a pitch (p) 1004, a helix angle ($\alpha$) 1006, a length 1008 (l), and a coil diameter ($\varnothing$) 1014. The pitch (p) 1004 refers to the distance between adjacent turns or coils along the helix. The pitch (p) 1004 may correspond to the number of wires in each layer of wires in a strand 920. For example, in a four-wire layer, the pitch (p) 1004 may be four times the wire diameter 902. The coil diameter ($\varnothing$) 1014 refers to the mean diameter of the coil. The mean coil diameter being determined by taking the sum of the outer coil diameter and the inner coil diameter divided by two. The helix angle ($\alpha$) 1006 is the angle between the helix and a center axis 1009 of the strand. The helix angle 1006 may be calcu-

lated by $\alpha$ =arctan (p/($\pi$*$\varnothing$)).

In some embodiments, the flexible shaft comprises a strand 920 formed of a plurality of layers of wires 910 around a center axis 1009 of the strand 920, including a first coiled layer closest to the center axis 1009. In some embodiments, the $i^{th}$ coiled layer from the center axis 1009 comprises a plurality of wires forming a helical coil with a helix angle 1006 of $\alpha_i$, wherein $\alpha_i$ is between $\alpha_{i,max}$ and $\alpha_{i,max}$ - 10 degrees, $\alpha_{i,max}$ being defined by $\cos \alpha_{i,max}=(L_i\, d_i)/(\pi\varnothing_i)$, where $L_i$ is a number of wires in the $i^{th}$ layer, $d_i$ is a diameter 902 of the wires in the $i^{th}$ layer, and $\varnothing_i$ is the mean diameter of the $i^{th}$ layer. In some embodiments, $\alpha_{max}$ of each layer of wires in a strand 920 is between 10 to 80 degrees, however, in optimal embodiments, each layer of wires in the flexible shaft 610 has a coil angle at or close to $\alpha_{i,max}$ to reduce stress under bending, and increase operational life.

In some embodiments, helix angle 1006 of the first coiled layer may be smaller than a helix angle 1006 of a second coiled layer radially outward of the first coiled layer. In some embodiments, the strand 920 may comprise 3 to 8 coiled layers, and the plurality of layers each includes 3 to 20 wires. In optimal embodiments, the first coiled layer comprises three wires, and the number of wires in a second coil layer radially outward of the first coiled layer is between 3-8 wires. In further embodiments, the number of wires in third to sixth coiled layers radially outward of the second coiled layer are each between 5 to 10 wires, and the number of wires in seventh and eighth layers radially outward of the third to sixth coiled layers are each between 6 to 12 wires.

In some embodiments, a wire diameter ($d_i$) 902 of wires in a layer (i) of the plurality of layers aside from the first coiled layer is determined based on

$$\varnothing = \frac{d_1}{\cos\gamma} + 2 \sum_{i=2}^{N} d_i$$ , wherein $\gamma = \frac{(L_1-2)180°}{2L_1}$ ,

wherein $\varnothing$ is the diameter 902 of the flexible shaft, $d_1$ is the wire diameter 902 of wires in the first layer, and $L_1$ is a number of wires in the first coiled layer. In some embodiments, the wire diameters 902 of wires in the plurality of layers are between 0.0005 to 0.08 inches, however, optimal wire diameters 902 may be found using the two equations above. In some embodiments, the strand 920 is formed of wires of the same diameter. In some embodiments, the wire diameters of wires within the same layer are the same, but wire diameters between wire layers may differ. In optimal embodiments, the wire diameter 902 of wires in the first coiled layer is smaller than the wire diameter 902 of wires in a second coiled layer radially outward of the first coiled layer.

In some embodiments, the layers of the plurality of layers may have alternating coil directions, with an outmost layer of the plurality of layers having a lay direction corresponding to the direction of the rotation of the end effector 108. For example, if the rotation is clockwise, the outmost layer has a left hand lay, and if the rotation is counter-clockwise the outmost layer has a right hand lay.

In some embodiments, the layers of the plurality of layers may have the same coil direction, such as a lang lay, with the lay direction corresponding to the rotation of the end effector 108 as described above. Utilizing a lang lay is generally preferred due to its high flexibility and torque transmitting capability. In some embodiments, the innermost layer of the plurality of layers is formed of a different material than the other layers, such as a superelastic material. In optimal embodiments, the inner 20-30% layer or layers of the plurality of layers are formed of a different material, and preferably, a superelastic material. In some embodiments, the flexible shaft 610 may be formed of a single strand 920 described herein. The optimal parameter combinations and ranges described for the flexible shaft 610 optimize the bending fatigue life of the flexible shaft 610, while still maintaining low bending stiffness and high torsional stiffness.

FIGS. 11 and 12 show embodiments of a flexible shaft 610 formed by a plurality of strands 920. A multi-strand flexible shaft 610 has a core 1108 and a plurality of strands 920 wrapped around the core 1108. FIG 11 shows a core 1108 formed of a strand of coiled wires, which may be the same or similar to strand 920. In some embodiments, the core 1108 may comprise one or more wires of the same or different materials, or may be hollow. In some embodiments, each strand 920 may be a strand 920 described with reference to FIGS. 9A, 9B, and 10. In some embodiments, a strand 920 may include a straight center wire 910' or may have a hollow center. Generally, a hollow shaft construction is used if the above optimization parameters and ranges are unable to achieve the desired life of the flexible shaft 610, in which case a hollow shaft construction with an increased number of outer layers, which increases torsional strength, should be used. In some embodiments, the strand 920 may coil around the core 1108 with a regular lay or a lang lay. In optimal embodiments, a wire rope with a fiber core is preferred due to greater flexibility and ability to enable lubrication of the rope from the inside.

FIG. 12 provides cross sectional views of examples of multi-strand flexible shaft constructions available on the market according to various embodiments. Example a) depicts a construction of three strands each formed of seven wires in two layers around a hollow core. Example b) depicts six seven-wire strands surrounding a core also formed of seven coiled wires. Example c) depicts six strands each with nineteen wires in three layers surrounding a core also formed of nineteen coiled wires. Example d) depicts six strands each formed of 37 wires in four layers surrounding a core also formed of 37 wires. Example e) depicts a shaft having the construction of example b) as a core with 6 more ropes of similar construction coiled around the core. Finally, example f) depicts a shaft with two layers of strands surrounding the core. The first layer includes six strains and the second, radially outward, layer includes twelve strands. Each strand includes nineteen wires coiled in three layers. The core similarly includes 19 nineteen wires coiled in three layers.

The shaft constructions in FIG. 12 are provided as examples only. In some embodiments, a flexible shaft may include any number of strands formed by any number of wires in any number of layers. With the flexible shaft 610 constructions described herein, the shaft may effectively transmit torque to the end effector 108 during repair or serving operating while reducing wear and breakage from the stress of high-speed rotation.

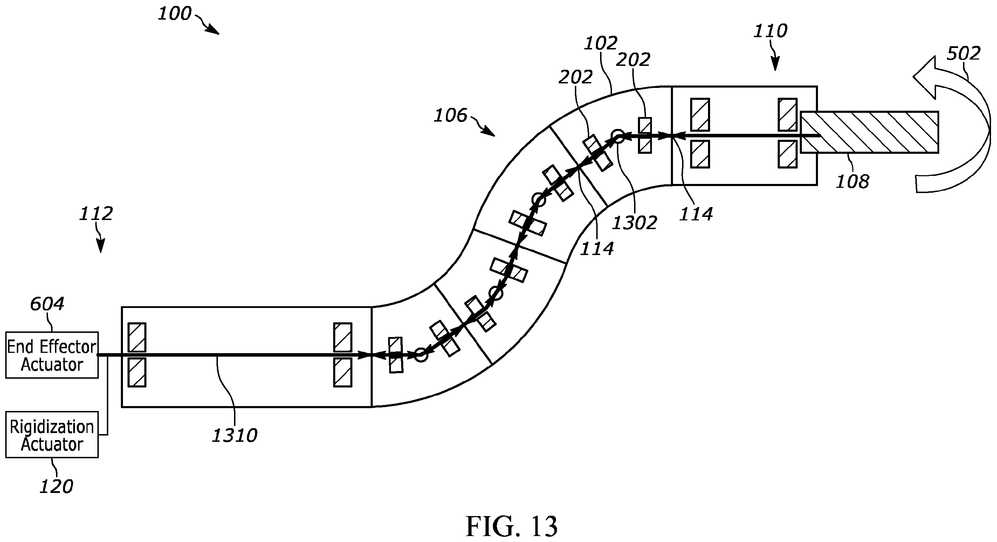

FIG. 13 is an illustration of an insertion tool 100 with a segmented shaft 1310 for driving the rotation of the end effector 108. In some embodiments, the insertion tool 100 includes a flexible section 106 having a plurality of plurality of rigidizable links 102 that may be similar to the links 102 described above. The insertion tool 100 further includes an end effector 108 coupled to a distal end 110 of the flexible section 106, and a rigidization actuator 120 configured to actuate the flexible section 106 between a rigidized state and a relaxed state.

Each link 102 includes at least one segment of the segmented shaft 1310 that is rotatable within the link 102 via bearings 202. In some embodiments, each segment of the segmented shaft 1310 includes a joint 1302 such as a universal joint between two shaft couplers 114. Each segment of the segmented shaft 1310 of each of the links 102 is connected to the adjacent segment of the segmented shaft 1310 and respective link 102 via the shaft couplers 114. Within a single link 102, there may be two segments of the segmented shaft 1310, with the universal joint coupled between each segment within the single link 102. The joint 1302 may include a pair of hinges located close together, oriented at 90° to each other, connected by a cross shaft. The joint 1302 is configured to transmit rotary motion between shaft couplers 114 on each side of the plurality of rigidizable links 102.

In the rigidized state, housings 222 (FIG. 3A) of adjacent links 102 of the plurality of rigidizable links 102 are engaged to limit relative moving of the housings 222, and shaft couplers 114 of adjacent links 102 are engaged to connect the segmented shaft 1310 such that the segmented shaft 1310 can transfer torque from an end effector actuator 604 at a proximal end 112 of the flexible section 106 to the end effector 108 to cause rotation 502 of the end effector 108. In some embodiments, the segments of the segmented shaft 1310 may include bevel gears, magnetic couplings, fluid couplings, friction plates, elastic couplings such as a flexible shaft or compression springs.

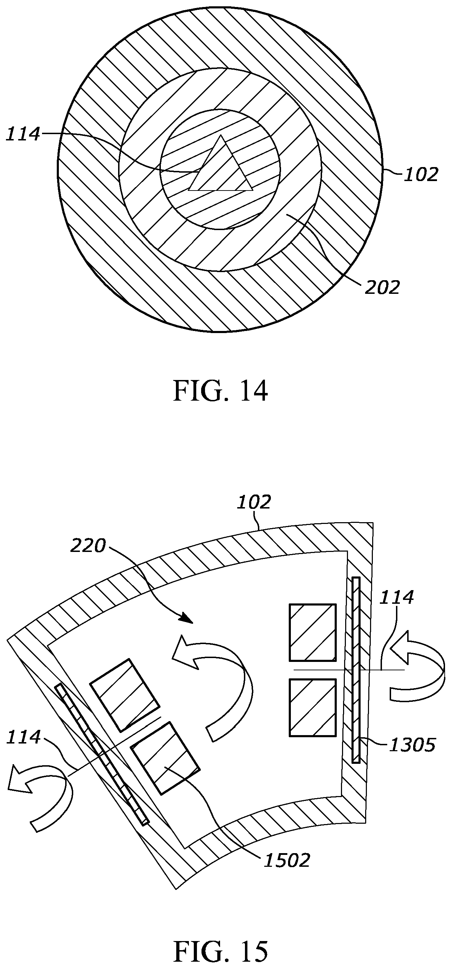

FIG. 14 is a further view of shaft coupler 114 within the link 102 previously shown in FIG. 13. The shaft coupler 114 may include surface features such as ridges and/or protrusions, that are configured to engage with corresponding features on the shaft coupler 114 of an adjacent link when the insertion tool 100 is rigidized. When the tool 100 is unrigidized, the features of the shaft couplers 114 will be unengaged. Bearings 202 are provided around the shaft coupler 114 to allow rotation of the shaft coupler 114 relative to the housing 222 (FIG. 3A) of the plurality of rigidizable links 102. In other embodiments, a shaft coupler may comprise any of the types of mechanisms previously described in relation to the tool-less disconnect interface 720, such as male and female features which further comprise a spline fitting or threaded fitting, wherein a thread direction of the threaded fitting is such that the threaded fitting tightens in the direction of rotation of the flexible shaft 610.

FIG. 15 depicts a rigidizable link 102 with a fluid coupling. In FIG. 15, the link 102 similarly has two shaft couplers 114 on each end that are configured to engage shaft couplers 114 on adjacent links 102 and rotate relative to the housing 222 (FIG. 3A) of the plurality of rigidizable links 102. For a link with fluid coupling as shown in FIG. 15, each shaft coupler 114 is further coupled to fluid coupling turbines 1502 within the central cavity 220. A seal 1305 is provided around a shaft connecting the shaft coupler 114 and the fluid coupling turbines 1502 within the central cavity 220 to maintain a fluid seal of the central cavity 220. When one of the shaft couplers 114 is rotated by the shaft coupler 114 of an adjacent link, one of the fluid coupling turbines 1502 cause a swirl in the fluid of the central cavity 220 which drives the rotation of the opposite fluid coupling turbine 1502 which in turn causes the opposite shaft coupler 114 to rotate. With a series of links having fluid coupling as shown in FIG. 15, torque can be transmitted from the proximal end 112 to the distal end 110 of the insertion tool 100 to drive the end effector 108.

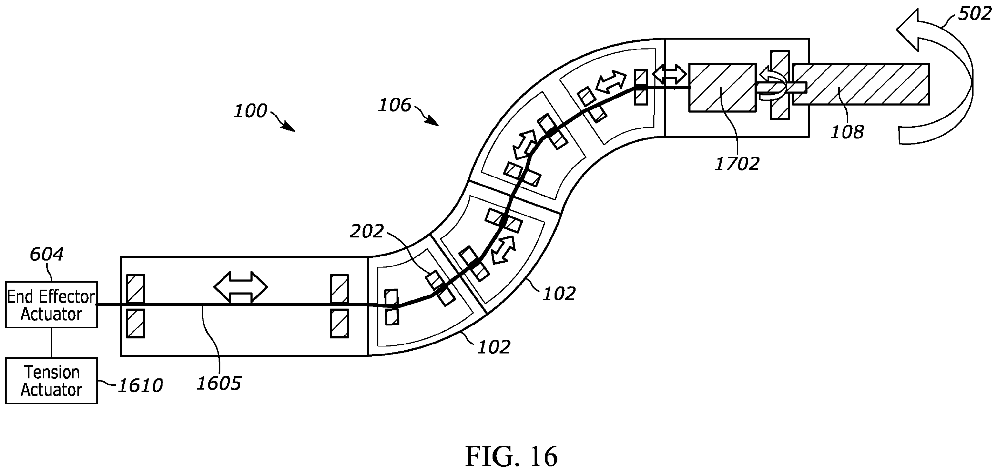

FIG. 16 is an illustration of an insertion tool 100 with a linear motion shaft 1605 and a motion conversion mechanism 1702 for driving the rotary motion of the end effector 108. The insertion tool 100 includes a flexible section 106, including a plurality of rigidizable links 102, and a tension actuator 1610 configured to actuate the flexible section 106 between a tensioned state and a relaxed state. The insertion tool 100 further includes an end effector 108 coupled to a distal end 110 of the flexible section 106, and a linear motion shaft 1605 inserted through the plurality of rigidizable links 102. The end effector actuator 604 may be configured to cause reciprocating linear movement of linear motion shaft 1605, and the motion conversion mechanism 1702 is configured to covert the linear movement of the linear motion shaft 1605 to rotational motion to drive the rotation 502 of the end effector 108. The rigidizable links 102 further include bearings 202 fitted around the linear motion shaft 1605 to reduce friction during the linear movement. In some embodiments, the motion conversion mechanism 1702 is a linear-to-rotary motion conversion mechanism such as an angled tooth cam mechanism. In some embodiments, the linear motion shaft 1605 may be a wire rope or solid wire which has high axial and buckling strength. The wire rope may have layers that are wound in opposite directions, and the innermost layer may be solid. In some embodiments, the linear motion shaft 1605 may be the same or similar to one or more embodiments of the flexible shaft 610 described with reference to FIGS. 6-12 herein.

Various embodiments of an insertion tool 100 with a rotatory end effector 108 are provided herein. An insertion tool 100 described herein allows service and repair operations within a confined space such as an interior of a turbine engine. A flexible shaft for transmitting rotatory motion to the end effector 108 is susceptible to breakage due to the stress from the rotary motion and friction. When a flexible shaft breaks at high rotary speed, the tool and even the device being repaired can be damaged. In some embodiments of the insertion tool 100 described herein, specific constructions of a flexible shaft 610 are provided to reduce the likelihood of breakage. In others embodiments the flexible shaft is replaced with other motion transfer mechanisms such as a segmented shaft, pneumatic turbines, and/or a linear motion shaft to eliminate the risk associated with flexible cable shaft breakage.

Further aspects of the disclosure are provided by the subject matter of the following clauses:

A insertion tool includes a flexible section; a rigidization actuator configured to actuate the flexible section between a rigidized state and a relaxed state, wherein in the rigidized state, a fluid path is formed within the flexible section; an end effector coupled to the flexible section; and an end effector actuator including at least one pneumatic turbine configured to transform fluid force of a fluid from the fluid path into torque to drive a rotation of the end effector.

The insertion tool of any preceding clauses, wherein the flexible section includes a plurality of rigidizable links.

The insertion tool of any preceding clauses, wherein the end effector actuator is housed within one or more of the plurality of rigidizable links.

The insertion tool of any preceding clauses, wherein the end effector actuator includes two or more pneumatic turbines each housed within a different one of the plurality of rigidizable links.

The insertion tool of any preceding clauses, wherein the two or more pneumatic turbines form a serial flow circuit along the fluid path.

The insertion tool of any preceding clauses, wherein the two or more pneumatic turbines include an upstream turbine and a downstream turbine having a different diameter, number of blades, and/or blade pitch.

The insertion tool of any preceding clauses, wherein the plurality of rigidizable links form two or more fluid paths when rigidized, and the two or more pneumatic turbines form a parallel flow circuit, each being driven via fluid from a different path.

The insertion tool of any preceding clauses, wherein the plurality of rigidizable links form two or more fluid paths when rigidized, wherein the two or more fluid paths form parallel flowpaths, source and return flowpaths, or a closed circuit flowpath.

The insertion tool of any preceding clauses, wherein the two or more pneumatic turbines include at least two turbines that are axially aligned with or centrifugal to each other.

The insertion tool of any preceding clauses, wherein the two or more pneumatic turbines form an Archimedean screw turbine or a conical screw turbine.

The insertion tool of any preceding clauses, wherein the two or more pneumatic turbines are connected via a shaft coupler, the two or more pneumatic turbines are coupled when the plurality of rigidizable links are in the rigidized state, and the shaft coupler allows for relative movement of the two or more pneumatic turbines when the plurality of rigidizable links are in the relaxed state.

The insertion tool of any preceding clauses, wherein the shaft coupler includes at least one of a flexible cable, a universal coupling, a cardan coupling, bevel gears, a magnetic coupling, a fluid coupling, friction plates, an elastic shaft, or compressing springs.

The insertion tool of any preceding clauses, wherein each of the plurality of rigidizable links houses a fluid tube, and the fluid path is formed by connecting fluid tubes within each of the plurality of rigidizable links.

The insertion tool of any preceding clauses, wherein one or more of the plurality of rigidizable links includes a sealing element for forming the fluid path with an adjacent rigidizable link, wherein the fluid path is a pneumatically sealed fluid path between a proximal end of the insertion tool and the end effector actuator.

The insertion tool of any preceding clauses, wherein a link of the plurality of rigidizable links includes a shaft guide configured to position a pneumatic turbine of the at least one pneumatic turbine housed within the link, and wherein the shaft guide includes an opening through which a shaft of the pneumatic turbine is inserted.

The insertion tool of any preceding clauses, wherein the shaft guide further includes a bearing around the opening configured to reduce friction between the shaft and the shaft guide.

The insertion tool of any preceding clauses, wherein the plurality of rigidizable links include an end link that houses a drive shaft and a bearing to support the end effector.

The insertion tool of any preceding clauses, wherein the fluid force includes fluid pressure, fluid velocity, or fluid velocity-pressure compounded.

The insertion tool of any preceding clauses, wherein the end effector actuator is housed substantially within an end link supporting the end effector.

The insertion tool of any preceding clauses, wherein the end effector includes at least one of a blending tool, a grinding tool, a drilling tool, a milling tool, a honing tool, or a polishing tool.

The insertion tool of any preceding clauses, wherein the insertion tool includes a turbo machinery servicing tool.

An insertion tool includes a flexible section including a plurality of rigidizable links; an end effector actuator: an end effector coupled to a distal end of the flexible section; a flexible shaft inserted through the flexible section, wherein torque is transferred from the end effector actuator to the distal end via the flexible shaft to cause a rotation of the end effector; and a tool-less disconnect interface between the end effector and the flexible shaft.

The insertion tool of any preceding clauses, wherein the flexible shaft includes a strand formed of a plurality of layers of wires around a center axis of the strand, including a first coiled layer closest to the center axis.

The insertion tool of any preceding clauses, wherein the flexible shaft includes 3 to 8 coiled layers.

The insertion tool of any preceding clauses, wherein the plurality of layers each includes 3 to 20 wires or 3 to 12 wires.

The insertion tool of any preceding clauses, wherein the first coiled layer includes three wires.

The insertion tool of any preceding clauses, wherein a number of wires in a second to fourth coiled layer radially outward of the first coiled layer is between 3 to 8 wires.

The insertion tool of any preceding clauses, wherein a number of wires in fifth to sixth coiled layers radially outward of the second to fourth coiled layers are each between 5 to 10 wires.

The insertion tool of any preceding clauses, wherein a number of wires in seventh and eight layers radially outward of the fifth to sixth coiled layers are each between 6 to 12 wires.

The insertion tool of any preceding clauses, wherein a wire diameter $(d_i)$ of wires in a layer $(i)$ of the plurality of layers aside from the first coiled layer is determined based on $\emptyset = \dfrac{d_1}{\cos\gamma} + 2\sum_{i=2}^{N} d_i$, wherein $\gamma = \dfrac{(L_1-2)180°}{2L_1}$, wherein wherein $\emptyset$ is the mean diameter of the flexible shaft, $d_i$ is the wire diameter of wires in the first layer, and $L_1$ is a number of wires in the first coiled layer.

The insertion tool of any preceding clauses, wherein wire diameters of wires in the plurality of layers are between 0.0005 inch to 0.08 inch.

The insertion tool of any preceding clauses, wherein an $i^{th}$ coiled layer from the center axis includes a plurality of wires forming a helical coil with a helix angle of $\alpha_i$, wherein $\alpha_i$ is between $\alpha_{i,max}$ and $\alpha_{i,max}$ - 10 degrees, $\alpha_{i,max}$ being defined by $cos(\alpha_{i,max}) = (L_i d_i)/(\pi\emptyset_i)$, where $L_i$ is a number of wires in the $i^{th}$ coiled layer, $d_i$ is a diameter of the wires in the $i^{th}$ coiled layer, and $\emptyset_i$ is the mean diameter of the $i^{th}$ coiled layer.

The insertion tool of any preceding clauses, wherein $\alpha_{max}$ is between 10 to 80 degrees.

The insertion tool of any preceding clauses, wherein the flexible shaft includes a hollow core radially inward of the first coiled layer.

The insertion tool of any preceding clauses, wherein the flexible shaft includes one or more straight wires radially inward of the first coiled layer.

The insertion tool of any preceding clauses, wherein the plurality of layers includes a plurality of monofilament wires.

The insertion tool of any preceding clauses, wherein layers of the plurality of layers have alternating coil directions.

The insertion tool of any preceding clauses, wherein an outmost layer of the plurality of layers has a lay direction corresponding to the direction of the rotation of the end effector, wherein if the rotation is clockwise, the outmost layer has a left hand lay, and wherein, if the rotation is counter-clockwise, the outmost layer has a right hand lay.

The insertion tool of any preceding clauses, wherein the innermost layer of the plurality of layers is formed of a different material than other layers.

The insertion tool of any preceding clauses, wherein the inner 20-30% layer or layers of the plurality of layers are formed of a different material than other layers.

The insertion tool of any preceding clauses, wherein the inner 20-30% layer or layers are formed of superelastic material.

The insertion tool of any preceding clauses, wherein the flexible shaft includes a plurality of strands coiled around a core.

The insertion tool of any preceding clauses, wherein the core includes a strand of coiled wires.

The insertion tool of any preceding clauses, wherein each of the plurality of strands has regular lay or lang lay.

The insertion tool of any preceding clauses, wherein the flexible shaft has a diameter of between 0.01 inch to 0.1 inch.

The insertion tool of any preceding clauses, wherein the flexible shaft includes wires made of one or more of stainless steel, high-performance alloy, nitinol, superelastic material, tungsten, or titanium.

The insertion tool of any preceding clauses, wherein the flexible shaft includes material formed by 80-90% cold work.

The insertion tool of any preceding clauses, further comprising a shaft bearing positioned within the flexible section and around the flexible shaft.

The insertion tool of any preceding clauses, wherein the shaft bearing includes an extension spring around the flexible shaft.

The insertion tool of any preceding clauses, wherein a ratio of an inner diameter of the extension spring to an outer diameter of the flexible shaft is between 1.2 to 3.0.

The insertion tool of any preceding clauses, wherein a coil direction of the extension spring has the same coil direction as the outmost layer of the flexible shaft.

The insertion tool of any preceding clauses, wherein at least one of an inner surface of the shaft bearing or an outer surface of the flexible shaft is coated with one or more of a wire rope lubrication, molybdenum disulfide coating, graphite coating, or Polytetrafluoroethylene coating.

The insertion tool of any preceding clauses, wherein the shaft bearing includes a flexible hollow Polytetrafluoroethylene tube or a braided cable sleeve.

The insertion tool of any preceding clauses, further including a shaft tension assembly configured to maintain a tension of the flexible shaft at between 1-10% of a tensile strength of the flexible shaft.

The insertion tool of any preceding clauses, wherein the tool-less disconnect interface includes a ferromagnetic spline fitting on the flexible shaft and a magnetic female adaptor coupled to the end effector.

The insertion tool of any preceding clauses, wherein the tool-less disconnect interface includes a swaged spline fitting on the flexible shaft and a micro chuck coupled to the end effector actuator.

The insertion tool of any preceding clauses, wherein the tool-less disconnect interface includes a square spline, a hexspline, or a polygonal spine on the flexible shaft.

The insertion tool of any preceding clauses, wherein the tool-less disconnect interface includes a threaded fitting wherein a thread direction of the threaded fitting is such that the threaded fitting tightens in the direction of rotation of the flexible shaft.

The insertion tool of any preceding clauses, further including a tension assembly configured to actuate the plurality of rigidizable links in the flexible section from a relaxed state to a rigidized state having a predefined shape.

The insertion tool of any preceding clauses, wherein the tension assembly includes one or more lines inserted through line guides in the plurality of rigidizable links.

An insertion tool includes a flexible section including a plurality of rigidizable links, wherein each link of the plurality of rigidizable links includes a housing and one or more shaft couplers configured to rotate within the housing; an end effector coupled to a distal end of the flexible section; and a rigidization actuator configured to actuate the flexible section between a tensioned state and a relaxed state; wherein in the tensioned state, housings of adjacent links of the plurality of rigidizable links are engaged to limit relative moving of the housings, and shaft couplers of adjacent links are engaged to transfer force from an end effector actuator at a proximal end of the flexible section to the end effector to cause a rotation of the end effector.

The insertion tool of any preceding clauses, wherein one or more links of the plurality of rigidizable links includes two shaft couplers connected via a universal joint.

The insertion tool of any preceding clauses, wherein one or more links of the plurality of rigidizable links includes two shaft couplers connected via a fluid coupling.

The insertion tool of any preceding clauses, wherein shaft couplers of adjacent links include male and female features configured to engage when the plurality of rigidizable links are tensioned.

An insertion tool includes a flexible section including a plurality of rigidizable links; a rigidization actuator configured to actuate the flexible section between a tensioned state and a relaxed state; an end effector coupled to a distal end of the flexible section; an effector connector inserted through the plurality of rigidizable links; an end effector actuator configured to cause linear movement of the effector connector; and a linear-to-rotary motion conversion mechanism configured to transfer force from the linear movement of the effector connector to drive a rotation of the end effector.

The insertion tool of any preceding clauses, wherein the linear movement includes oscillating linear motion.

The insertion tool of any preceding clauses, wherein the linear-to-rotary motion conversion mechanism includes an angled tooth cam mechanism.

The insertion tool of any preceding clause, wherein the two or more pneumatic turbines are connected via a shaft coupler that allows for relative movement of the two or more pneumatic turbines when the plurality of rigidizable links are in the relaxed state

**Claims**

1. An insertion tool comprising:

   a flexible section (106);
   a rigidization actuator (120) configured to actuate the flexible section (106) between a rigidized state and a relaxed state, wherein in the rigidized state, a fluid path is formed within the flexible section (106);
   an end effector (108) coupled to the flexible section (106); and
   an end effector actuator (604) comprising at least one pneumatic turbine configured to transform fluid force of a fluid from the fluid path into torque to drive a rotation (502) of the end effector (108).

2. The insertion tool of claim 1, wherein the flexible section (106) comprises a plurality of rigidizable links (102).

3. The insertion tool of claim 2, wherein the end effector actuator (604) is housed substantially within one or more of the plurality of rigidizable links (102).

4. The insertion tool of any of claims 2-3, wherein the end effector actuator (604) comprises two or more pneumatic turbines (206) each housed within a different one of the plurality of rigidizable links (102).

5. The insertion tool of claim 4, wherein the two or more pneumatic turbines (206) form a serial flow circuit along the fluid path.

6. The insertion tool of claim 5, wherein the two or more pneumatic turbines (206) comprise an upstream turbine and a downstream turbine having different diameters, number of blades, and/or blade pitch.

7. The insertion tool of claim 4, wherein the plurality of rigidizable links (102) form two or more fluid paths when rigidized, wherein the two or more fluid paths form parallel flowpaths, source and return flowpaths, or a closed circuit flowpath.

8. The insertion tool of claim 4, wherein the two or more pneumatic turbines (206) include at least two turbines that are axially aligned with or centrifugal to each other.

9. The insertion tool of claim 4, wherein the two or more pneumatic turbines (206) form an Archimedean screw turbine or a conical screw turbine.

10. The insertion tool of claim 4, wherein the two or more pneumatic turbines (206) are connected via a shaft (207) coupler (114) that allows for relative movement of the two or more pneumatic turbines (206) when the plurality of rigidizable links (102) are in the relaxed state.

11. The insertion tool of claim 10, wherein the shaft (207) coupler (114) comprises a flexible cable, universal coupling, cardan coupling, bevel gears, magnetic coupling, fluid coupling, friction plates, elastic shaft (207), or compressing springs.

12. The insertion tool of any preceding claim, wherein each of the plurality of rigidizable links (102) houses a fluid tube, and the fluid path is formed by connecting fluid tubes within each of the plurality of rigidizable links (102).

13. The insertion tool of any preceding claim, wherein one or more of the plurality of rigidizable links (102) comprise a sealing element for forming the fluid path with an adjacent rigidizable link, wherein the fluid path is a pneumatically sealed fluid path between a proximal end (112) of the insertion tool (100) and the end effector actuator (604).

14. The insertion tool of claim 2,

   wherein a link of the plurality of rigidizable links (102) comprises a shaft (207) guide configured to position a pneumatic turbine of the at least one pneumatic turbine housed within the link, and wherein the shaft (207) guide comprises an opening through which a shaft (207) of the pneumatic turbine is inserted.

15. The insertion tool of claim 14, wherein the shaft (207) guide further comprises a bearing around the opening configured to reduce friction between the shaft (207) and the shaft (207) guide.

FIG. 1

EP 4 647 618 A1

Fluid Source —125    Rigidization Actuator —120

Insertion Tool 100

1 —102    ←—112

2

208

3

4

—114

5 —104

108

110

## FIG. 2A

Fluid Source —125    Rigidization Actuator —120

Insertion Tool 100

112→

1 —102

208

106

2

3

4    5

End Link 104

108

110

## FIG. 2B

FIG. 3A

FIG. 3B

FIG. 4

EP 4 647 618 A1

FIG. 5A

FIG. 5B

FIG. 6

EP 4 647 618 A1

FIG. 7A

FIG. 7B

**FIG. 8**

**FIG. 9A**

FIG. 9B

FIG. 10

Center Wire *910'*

Wire *910*

*920* Strand

*610*

Core *1108*

## FIG. 11

a)

Cable Diameter
3x7

b)

Cable Diameter
7x7

c)

Cable Diameter
7x19

d)

Cable Diameter
7x37

e)

Cable Diameter
7x49

f)

Cable Diameter
19x19

## FIG. 12

FIG. 13

FIG. 14

FIG. 15

FIG. 16

EP 4 647 618 A1

Europäisches
Patentamt
European
Patent Office
Office européen
des brevets

# EUROPEAN SEARCH REPORT

**Application Number**

EP 25 17 1723

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2022/221706 A1 (TRIVEDI DEEPAK [US] ET AL) 14 July 2022 (2022-07-14) | 1-3, 12-15 | INV. F16C1/04 |
| A | * paragraphs [0047], [0049], [0075], [0076] * | 4-11 | F16C1/26 F16C1/28 A61B1/00 |
| | ----- | | |
| X | CN 113 803 169 A (GEN ELECTRIC; OLIVER CRISPIN ROBOTICS LTD) 17 December 2021 (2021-12-17) | 1-3, 12-15 | B23P6/00 B25B13/48 B25B23/00 |
| A | * paragraphs [0037], [0074]; figures 1-5 * | 4-11 | B25J9/06 B25J18/06 F01D5/00 |
| | ----- | | F16C1/08 |
| Y | US 7 097 539 B2 (MOELLER DIETER [US] ET AL) 29 August 2006 (2006-08-29) * page 2, column 3, line 34 - line 48; figures 1-3 * | 1-3, 12-15 | |
| | ----- | | |
| A | US 2006/089531 A1 (TARTAGLIA JOSEPH M [US] ET AL) 27 April 2006 (2006-04-27) * paragraphs [0019], [0024], [0025], [0050], [0055], [0072], [0084]; figures 3A, 8A, 8B, 9A-9C, 10 * | 1-15 | |
| | ----- | | **TECHNICAL FIELDS SEARCHED (IPC)** |
| A | US 4 227 584 A (DRIVER W B) 14 October 1980 (1980-10-14) * page 2, column 3, line 6 - line 29; figures 2,3 * | 1-15 | F16C B25B B23P F01D B25J A61B |
| | ----- | | |

The present search report has been drawn up for all claims

| Place of search | Date of completion of the search | Examiner |
|---|---|---|
| The Hague | 27 August 2025 | Kovács, Endre |

EPO FORM 1503 03.82 (P04C01)

## ANNEX TO THE EUROPEAN SEARCH REPORT
## ON EUROPEAN PATENT APPLICATION NO.

EP 25 17 1723

This annex lists the patent family members relating to the patent documents cited in the above-mentioned European search report.
The members are as contained in the European Patent Office EDP file on
The European Patent Office is in no way liable for these particulars which are merely given for the purpose of information.

27-08-2025

| Patent document cited in search report | Publication date | Patent family member(s) | Publication date |
|---|---|---|---|
| US 2022221706 A1 | 14-07-2022 | CA 3144931 A1 | 08-07-2022 |
| | | CN 114750109 A | 15-07-2022 |
| | | EP 4026985 A1 | 13-07-2022 |
| | | US 2022221706 A1 | 14-07-2022 |
| CN 113803169 A | 17-12-2021 | CA 3120629 A1 | 11-12-2021 |
| | | CN 113803169 A | 17-12-2021 |
| | | CN 119844216 A | 18-04-2025 |
| | | EP 3933169 A2 | 05-01-2022 |
| | | US 2021388737 A1 | 16-12-2021 |
| | | US 2024280033 A1 | 22-08-2024 |
| US 7097539 B2 | 29-08-2006 | US 2005148287 A1 | 07-07-2005 |
| | | US 2006258265 A1 | 16-11-2006 |
| US 2006089531 A1 | 27-04-2006 | AT E390077 T1 | 15-04-2008 |
| | | AU 2003217794 A1 | 16-09-2003 |
| | | DE 60319966 T2 | 16-04-2009 |
| | | EP 1487318 A2 | 22-12-2004 |
| | | ES 2301786 T3 | 01-07-2008 |
| | | US 2003032859 A1 | 13-02-2003 |
| | | US 2006089528 A1 | 27-04-2006 |
| | | US 2006089529 A1 | 27-04-2006 |
| | | US 2006089530 A1 | 27-04-2006 |
| | | US 2006089531 A1 | 27-04-2006 |
| | | US 2006089532 A1 | 27-04-2006 |
| | | WO 03073920 A2 | 12-09-2003 |
| US 4227584 A | 14-10-1980 | NONE | |

EPO FORM P0459

For more details about this annex : see Official Journal of the European Patent Office, No. 12/82

**EP 4 647 618 A1**

**Patent documents cited in the description**

- US 63643163
- US 63735776 B
- US 20220221706 A1